# EUROPEAN PATENT APPLICATION

(11) **EP 4 821 605 A1**
(43) Date of publication of application: **14.10.2026**
(21) Application number: 25223377.0
(22) Date of filing: 15.12.2025
(51) Int. Cl.: B03C 7/00, B03C 7/12, B03C 7/02

(54) **SEPARATION CHAMBER FOR ELECTROSTATIC SEPARATOR AND METHOD FOR PERFORMING ELECTROSTATIC SEPARATION**

(30) Priority: 13.12.2024 CZ 20240484
(71) Applicant: Zapadoceska univerzita v Plzni, 301 00 Plzen (CZ)
(72) Inventor: Mach, Frantisek, 30100 Plzen (CZ); Kuthan, Jiri, 30100 Plzen (CZ); Sodomka, Ondrej, 26901 Rakovnik (CZ); Jurik, Martin, 36007 Karlovy Vary (CZ); Vitek, Martin, 36001 Sadov (CZ)
(74) Representative: Dadej, Leopold

(57) **Abstract**

A separation chamber for an electrostatic separator and a method for performing electrostatic separation, where the separation chamber comprises a rectifier (1) of the flow of particles of a separated mixture, at least two separation zones (3a, 3b) positioned downstream thereof provided with at least two dedicated high-voltage electrodes (4) for separately generating an electric field with a selection of the following parameters: shapes and/or sizes of the individual high-voltage electrodes (4), values of the applied electric voltage, polarity of the voltage of the high-voltage electrodes (4), orientation or inclination of each high-voltage electrode (4) relative to the input direction of the flow of the particles of the separated mixture, the position and the uniform or non-uniform placement of the high-voltage electrodes (4) around the central axis of the separation chamber passing in the direction of the flow of the particles of the separated mixture, wherein collection collectors (5) are positioned by the separation zones (3a, 3b) in the direction of the flow of the particles of the separated mixture.

## Description

### Technical Field

The invention relates to a separation chamber for an electrostatic separator, in particular for separating or purifying crushed, ground or granular materials such as plastics or individual kinds of plastics in a mixture, agricultural crops, minerals, or other mixtures of materials, which may acquire different electric charge, and further, to a process of electrostatic separation and its control in order to maximize the efficiency of the separation process and purity of the output materials obtained from the separated mixture.

### Background of the Invention

In the current state of the art, the electrostatic separator is used for the separation or purification of multi-component mixtures of materials or substances by utilizing the force action of an electric field on electrically charged particles in the given mixture. In the electrostatic separator known from the state of the art, a mixture of materials to be separated is first electrically charged, whereby the individual components of the mixture acquire an electric charge.

For charging the mixture, contact charging using the triboelectric effect is most commonly used, where the mixture undergoes intensive friction due to vibration (vibrating tables) or mechanical mixing (rotating drums or paddles), or alternatively by means of an air flow (fluidized bed or cyclone). Among other charging methods, it is possible to include bombardment of particles of the separated mixture by ions generated by means of an ionization electrode or a system thereof, which are positioned such that the flow of the separated material mixture passes in their vicinity. During charging, different types of materials contained in the separated mixture acquire different electric charges, both in terms of magnitude and polarity (positive/negative electric charge).

The electrically charged mixture subsequently enters a separation chamber, in which, due to the force action of the electric field, deflection or capture, i.e., influencing of the electrically charged particles of the mixture, occurs, thereby resulting in their separation based on differences in the electric charge. The separation chamber typically contains one pair of high-voltage electrodes oriented parallel to or at a slight angle to the flow of particles of the separated mixture. The electrodes may differ in shape, size, as well as the applied electric voltage or its polarity. Typically, electrodes in the form of parallel plates or coaxially disposed cylinders are used. The power supply is typically implemented by connecting one of the electrodes to a high-voltage generator and the other electrode to a high-voltage generator of opposite polarity or to ground (zero electric potential). After passing through the separation chamber, the mixture is subsequently captured into collection bins, from which the individual components are transported for subsequent processing or storage. Typically, three or more collection bins are used.

Depending on the embodiment of the separation chamber, various types of known embodiments of electrostatic separators can be distinguished, and a basic division can be made into:
- a "free-fall" (vertical) separator, in which the mixture passes through the separation chamber in free fall,
- a "roll-type" (drum) separator, in which the mixture is poured onto a rotating drum, which typically also forms one of the electrodes (this type of separator, in addition to deflection electrodes, also contains an ionization electrode used for charging particles of the mixture),
- a "fluidized" (fluid) separator, where the mixture is forced against gravity by an air flow into the separation chamber.

Setting of the separation process is typically achieved by the magnitude and polarity of the voltage of the electrodes and the amount of the separated mixture entering the separation chamber per unit of time (volumetric flow rate characterizing the speed of flow of the mixture through the separation chamber). Further, by the air flow (if the separated mixture is transported by a pneumatic conveying system) or by the speed of rotation or movement of movable electrodes (if used in the given solution) or other movable parts (for example mechanical collectors).

Thus, a person skilled in the art is familiar with an electrostatic separator utilizing the triboelectric effect for charging particles of the separated mixture (also known as triboelectrostatic separators) for sorting mixtures of both electrically conductive and non-conductive materials, and the general principles of controlling the separation process based primarily on the magnitude of the electric voltage.

From the current state of the art, a solution is known, described, for example, in the patent US11305295B2, which discloses a device for electrostatic separation of granular mixtures of millimeter or submillimeter size composed of electrically conductive and non-conductive particles. This is a "free-fall"-type separator. The mixture is electrically charged prior to entering the separation chamber, and the device subsequently uses forces for its separation formed in an electric field generated by two coaxial cylindrical electrodes, which are perpendicular to the direction of the aerodynamic force formed by the air flow entraining the particles of the mixture and the gravitational force acting on them. The particles of the separated mixture that acquire an electric charge during charging are captured in the separation chamber on the cylindrical electrodes due to electric forces and are subsequently continuously scraped off and transported away via a cyclone separator into a collection bin by means of a rotating mechanical collector coaxial with fixedly positioned electrodes (the opposite variant, i.e., rotating electrodes coaxial with a fixed mechanical collector, is also described). Particles without electric charge pass through the separation chamber in the direction of action of the aerodynamic forces of the air flow and gravity into a separate cyclone separator and collection bin. Setting of the separation process may be carried out by changing the air flow, the amount of separated mixture entrained by the air, the voltage of the electrodes, and the rotational speed of the mechanical collector or the electrodes.

A different technical solution utilizing the same force action is described in the patent US8541709B2, which discloses a device for electrostatic separation of granular mixtures of electrically non-conductive (insulating) materials. This is a "fluidized"-type separator. The separation utilizes air flow between two electrodes in a separation chamber into which a mixture of particles of various materials is entrained such that the particles turbulently levitate in the air flow and become electrically charged by contact between themselves and/or by contact with the walls of the separation chamber. The electrically charged particles move in the electric field between electrodes almost perpendicular to the air flow either in the direction of the electric field if they are positively charged, or in the opposite direction if their charge is negative. The particles subsequently adhere to the surface of the electrodes, which are formed by a moving belt and are entrained into a space outside the air flow, where they are removed from the electrodes by a mechanical collector and conveyed away outside the separation chamber. Setting of the separation process may be carried out by the air flow, the amount of separated mixture entrained by the air, the magnitude of the voltage of the electrode, and the speed of their movement.

A similar type of separator is described in the patent document US4895642A, in which electrically charged particles of electrically non-conductive material, such as plastics and paper, are extracted from an air flow by a shaft equipped with a moving belt that protrudes into the shaft or adjoins it laterally, wherein the moving belt has an opposite charge and the particles of the separated mixture adhere to it. By rotation of the belt, continuous cleaning thereof is achieved by means of a mechanical collector. Control of the separation process may be carried out by the air flow, the amount of separated mixture entrained by the air, and the speed of movement of the belt.

The patent document WO2013177373A1 describes a different embodiment of a separator that utilizes air flow together with the separated mixture of plastic material and aggregate through a Venturi tube, where drying of the mixture occurs. Subsequently, the mixture is transported by a belt conveyor to a charging electrode, where the plastic particles acquire an electric charge and are captured by a rotating grounded drum. This is a "roll-type" separator. A mechanical collector bears against the rotating drum and removes the electrically charged plastic particles from the surface of the drum, which then fall into a collection bin. Setting of the separation process is addressed by means of the magnitude of the voltage of the charging electrode, the amount of separated mixture entrained by the belt conveyor, and the rotational speed of the grounded cylindrical electrode.

A different technical solution is described in the patent document WO2023083988A1, in which a system of at least one pair of rotating cylindrical electrodes provided with mechanical collectors is used for separating a mixture containing fibers and particles. Electrically charged separated mixture supplied into the electrode space from a charger formed by a rotating tube is captured on the electrodes. This is a "roll-type" separator. The separator is characterized by the fact that the rotating drum is equipped with a closing grid that retains the separated mixture until the individual fibers or particles acquire a sufficient electric charge. Setting of the separation process is addressed by the polarity and magnitude of the voltage of the rotating electrodes, as well as by the speed and direction of their rotation.

Embodiments of separators are further known, described, for example, in the patents US6927354B1 or DE112009004345B4, in which a separated mixture of granular electrically non-conductive materials is electrically charged by means of the triboelectric effect in a rotating drum and subsequently passes in free fall through a separation chamber containing a pair of opposite inclined electrodes that form an electric field deflecting particles based on the polarity and magnitude of their charge. In both of the above examples, this is a "free-fall"-type separator. The technical solution described in the patent US6927354B1 is characterized in that it enables separation of mixtures of granular electrically non-conductive materials with different fractions in two separation chambers, wherein mutual separation of smaller and larger fractions of particles occurs in a screening part of the rotating drum serving for charging the particles of the mixture. The technical solution described in the patent DE112009004345B4 is characterized, with respect to the described state of the art, in that the mixture of plastics is first separated based on the specific weight by means of an inclined plane, which, by the action of gravity, ensures separation of lighter particles from heavier ones, and subsequently separation of heavier particles occurs by free fall between opposite electrodes positioned in the separation chamber. In the above examples, the setting of the separation process is addressed by the polarity and magnitude of the voltage of the electrodes and, simultaneously, the amount of separated mixture conveyed by the rotating drum.

No known technical solution describes a chamber for an electrostatic separator for crushed, ground or granular materials that is divided into independent and separately settable zones positioned in the direction of the flow of the particles so as to allow setting and control of the separation process by changing the distribution of the intensity of the electric field acting on the moving electrically charged particles of the separated mixture during their passage through the separation chamber.

### Summary of the Invention

The object of the invention is a separation chamber for an electrostatic separator, where said separation chamber comprises a rectifier of the flow of the particles, a separation zone positioned downstream provided with high-voltage electrodes, and, positioned downstream in the direction of the flow of the particles, collection collectors, wherein the essence of the invention lies in the fact that the separation chamber contains at least two independent separation zones, where each of these separation zones is provided with at least two dedicated high-voltage electrodes for generating an electric field with the possibility, in each separation zone (3a, 3b), to separately set or select at least one of the following parameters: shapes of the electrodes, sizes of the electrodes, values of the applied electric voltage, polarity of the voltage of the electrodes, orientation or inclination of each electrode relative to the central axis of the separation chamber passing in the direction of the flow of the particles, position and the uniform or non-uniform placement of the electrodes around the central axis of the separation chamber passing in direction of the flow of the particles of the separated mixture, wherein the collection collectors are positioned at least downstream of the last separation zone.

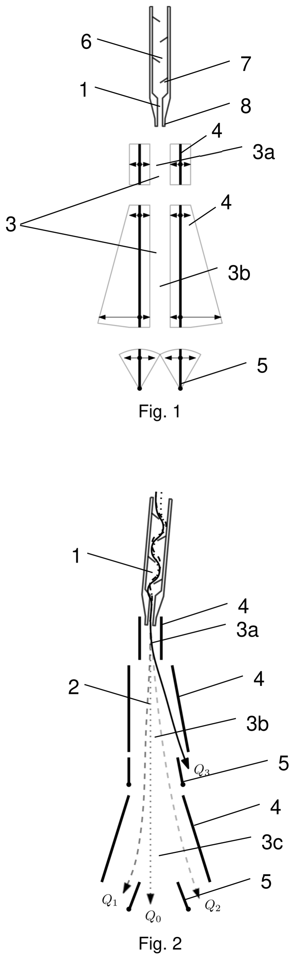

The central axis of the vertical separation chamber passes vertically through this separation chamber in the direction of the flow of the particles, wherein it is usually identical to the central axis of the non-inclined rectifier centered at the center of the chamber and the flow of particles emerging therefrom, this axis is considered to be the reference axis and the high-voltage electrodes and thus the flow of the separated particles may be variously deflected relative to it. However, in a preferred embodiment according to fig. 2, the rectifier is inclined and thus the axis of the rectifier is not coincident with the vertical axis of the separation chamber. Thus, the high-voltage electrodes in the individual separation zones and within each separation zone may have different shapes and sizes and each high-voltage electrode or pair of high-voltage electrodes within each separation zone is separately settable, allowing to independently adjust the position or inclination of the individual electrodes, which may be non-uniformly placed within each separation zone around the central axis of the separation chamber passing in the direction of the flow of the particles, as well as the value of the applied electric voltage or polarity thereof. A significant improvement and a major advantage of the invention is the possibility to change the vector of the intensity of the electric field ***E*** and thus also the vector of the force action ***F***ₑ *= **E*****Q* of the electric field on the particles of the separated mixture with the electric charge *Q* in the individual zones, further, the possibility to adjust the direction of the flow of the particles of the separated mixture between the individual zones by means of separation collectors, or alternatively convey a part of the flow of the particles away from the chamber, and the possibility to change the relative position of the zones, where the zones can be brought closer or further apart. Said improvement is essential for influencing the trajectory of the flow of the particles of the separated mixture passing through the separation chamber, especially with respect to the purity of the output materials, i.e., the respective components obtained by the separation of the mixture and simultaneously the high efficiency of the separation process defined as the ratio of the volume of the output materials to the total volume of the separated mixture.

The main practical advantage of the invention is the possibility to efficiently separate materials with different values of the electric charge *Q*, which is essential because
- different kinds of materials charge to different values of the electric charge *Q* - empirical findings of the electric charge *Q* for different materials are described by so-called triboelectric series,
- and simultaneously the distribution of the electric charge *Q* within particles of the same material in the mixture is random - the triboelectric effect is stochastic, while the electric charge *Q* usually has a normal distribution,
- and the particles of the mixture usually have different sizes and thus also weights, which significantly influences their behavior in the separation chamber.
Said facts manifest themselves in different speeds of the movement of the particles in the separation chamber and thus also in different trajectories of their movement during separation.

By changing the vector of the intensity of the electric field ***E*** and therefore the vector of the force action ***F***ₑ of the electric field on the particles of the separated mixture with the electric charge *Q* in the individual separation zones of the separation chamber positioned in the direction of the flow of the particles, the shaping of the flow of the separated particles can be achieved.

For each independent zone in the direction of the flow of the particles of the separated mixture, it is possible to select the polarity of the voltage and the range of values of the applicable electric voltage, typically in the range of 0 to 100 kV for asymmetric supply, or more preferably -100 to 100 kV for symmetric supply. The range of the electric voltage is dependent on the specific embodiment of the separation chamber and is limited by the dielectric strength *E*ₚ at which breakdown occurs, i.e., a breakdown of the insulating distance between the individual electrodes or between the electrodes and the external casing of the separation chamber. The separation chamber must always be closed to prevent leakage of the particles of the separated mixture and its external casing must be electrically effectively grounded.

The preferred embodiments are described in the individual dependent claims.

The high-voltage electrodes in each independent separation zone of the separation chamber are connected to a separate voltage source, which is preferred especially because a different magnitude of the applied electric voltage, or its polarity, may be set in each separation zone, and together with the possibility of setting the position or inclination of each high-voltage electrode, the distribution of the electric field can be sequentially influenced along the individual separation zones in the direction of the flow of the particles. The choice of polarity, voltage, position, and inclination of each respective high-voltage electrode depending on the setting of the upstream separation zone and the downstream separation zone in the direction of the flow of the particles of the separated mixture is essential. It is true that the vector of the intensity of the electric field ***E*** between the high-voltage electrodes of each respective separation zone must be perpendicular to the direction of the flow of the particles of the separated mixture, and it is simultaneously true that the magnitude of the intensity of the electric field *E* = |***E***| reaches its maximum between the high-voltage electrodes of the corresponding separation zone. This can be achieved by positioning the individual separation zones of the separation chamber relative to each other and simultaneously changing the magnitude of the electric voltage, the position, and the inclination of the respective high-voltage electrodes in the given zone. As a result, the flow of the separated particles can be shaped to achieve a high purity of the resulting components and a high efficiency of the separation process. The possibility of changing the vector of the intensity of the electric field ***E***, and thus also the vector of the force action ***F***ₑ of the electric field on the particles of the separated mixture with the electric charge Q is thus quite essential.

The high-voltage electrodes in each separation zone are most preferably non-uniformly placed around the central axis of the separation chamber passing in the direction of the flow of the particles of the separated mixture. If there are exactly two high-voltage electrodes in one separation zone, they are most preferably situated opposite each other, i.e., at 180° on an imaginary circle around the central axis of the separation chamber passing in the direction of the flow of the particles of the flow, i.e., in the direction of the flow of the non-deflected particles of the separated mixture, i.e., the direction that the particles would have if they were not charged with the electric charge *Q* and the rectifier or its output was not in any way inclined.

The high-voltage electrodes of the second zone are preferably in the same arrangement below the high-voltage electrodes of the first zone.

The distance of the high-voltage electrodes within the separation zone is generally in the range of 100 mm to 1000 mm and is selected such that the insulating distance of the high-voltage electrodes is maintained and the dielectric strength *E*ₚ of the given arrangement is not exceeded. Preferably, the mutual positioning of the high-voltage electrodes and their distance can minimize reflection by the high-voltage electrodes being inclined relative to the central axis of the separation chamber passing in the direction of the flow of the particles of the separated mixture such that their mutual distance in the direction of the flow of the particles increases.

The high-voltage electrodes are made of a material with a high electrical conductivity, for example copper or aluminum. The high-voltage electrodes may have the shape of a plate, or possibly even slightly curved, e.g., in a concave shape towards the flow of the particles of the separated mixture, or e.g. they may have a cylindrical shape. Due to the shape of the high-voltage electrodes, the elimination of sharp edges, or strongly curved surfaces in general, is important in terms of reducing the gradient of the vector of the intensity of the electric field ***E*** and thus the occurrence of corona discharge or even breakdown of the dielectric strength *E*ₚ. An important aspect is also the weight of the high-voltage electrodes, which should be as low as possible to ensure their movement and rotation and simultaneously the need to ensure their electrical insulation. The reduction of the weight of the high-voltage electrodes can be achieved, for example, by forming hollow high-voltage electrodes or by metallizing a supporting material with a lower density, for which, for example, different kinds of plastics are used. Both of the mentioned procedures may preferably be used to eliminate strongly curved surfaces.

Preferably, the high-voltage electrodes may be at least partly, e.g., over their entire surface area, or at their edges, covered with a thin layer of electrically non-conductive insulating material, for example various types of electrical insulating varnishes, coatings, or polymer materials having a higher relative permittivity than the permittivity of air, thereby allowing to reduce the intensity of the electric field *E* at the interface between the electrode and the surrounding environment, thereby allowing to reduce the formation of corona discharge or breakdown of the dielectric strength *E*ₚ. The coverage of the electrodes is further preferred also in relation to the elimination of reflections of the particles of the separated mixture that may impinge on the electrodes.

The coverage of the high-voltage electrodes by the aforementioned layer of non-conductive material also serves to reduce the capture of electrically charged particles on the surface of the high-voltage electrodes, especially of dust particles in the separated mixture. If these particles continue to be captured, it is necessary to ensure their removal. Preferably, the separation chamber contains at least one means for removing particles captured on the high-voltage electrode, which is, for example, accomplished by blowing an air flow, or by suction, or by mechanical knocking.

Preferably, one additional electrode can be added to each respective separation zone of the separation chamber to change the distribution of the vector of the intensity of the electric field within the separation zone, which separates the separation zone in terms of the distribution of the vector of the intensity of the electric field ***E***. This makes it possible to influence the distribution of the intensity of the electric field within one zone and thus also the trajectory of the separated electrically charged particles of the separated mixture.

The positioning of the high-voltage electrodes in the individual zones may be implemented by a positioning means for the position and/or distance and/or angle of rotation of each respective high-voltage electrode, or by a common such means for positioning all or multiple high-voltage electrodes simultaneously. For example, means with commonly available elements, for example with positionable telescopic holders of the high-voltage electrodes, slides, articulated/rotary joints, flexible attachments, etc., which are commonly known to one skilled in the art and their application is routine, may be used for this purpose. The positioning can be manual or automated, i.e. controlled by a computer or other control unit by means of a program, by input of input data by the user and by execution of commands.

The respective high-voltage electrodes must be isolated from the surrounding components of the separation chamber or other components of the separator. This can be achieved by means of suitably selected materials, which include, for example, inorganic glass-based materials, e.g. alumino-borosilicate or borosilicate glass, or organic materials such as thermoplastics, e.g. polyethylene, polyvinyl chloride, polymethyl methacrylate (plexiglass), or nylon, or thermosetting plastics, for example bakelite or duroplast, or natural materials such as wood. Preferably, composite materials may be used that provide the necessary electrical insulation, mechanical strength, and simultaneously low weight, e.g. glass laminate, paper laminate, or fabric laminate.

In addition to the location at the output of the last separation zone in the direction of the flow of the particles, where at least one collection collector is positioned, separately settable collection collectors may follow further downstream of the other separation zones in the separation chamber. The collection collectors most preferably positioned immediately downstream of the respective separation zone are used to change the direction of the flow of the separated particles and are, for example, implemented as a mechanical barrier, wherein for each of the collection collectors the position and angle of rotation of the collection collector may be independently changed, i.e. they are slidable and/or tiltable. They are positioned at least at the output of the last separation zone in the direction of the flow of the particles, but they may be positioned at the output of any other or each zone such that the flow of the particles between the individual zones may be adjusted or diverted away from the subsequent separation zones in the separation chamber. Generally, however, they are not positioned at the output of the first zone in the direction of the flow of the particles of the separated mixture. Preferably, collection collectors made of electrically conductive materials, for example aluminum or steel, may be used, which allow their electrical grounding and thus achieve division of the given zone in terms of the distribution of the intensity of the electric field *E*.

The rectifier of the flow of the particles is formed by a hollow object, e.g. a hollow cylinder or hollow cuboid, at the output of which there is a narrowed conical mouth elongated so as to restrict the dispersion of the flow of the particles prior to the entry of the separated mixture into the first high-voltage zone of the separation chamber. The rectifier may be tiltable and simultaneously its relative position relative to the first separation zone of the separation chamber can be changed. The rectifier may also contain a cascade of stops that serve to reduce the speed of the moving particles. The flat or concave stops may be preferably inclined and alternately placed on one or the other side of the rectifier so as to avoid capture of the particles and subsequent clogging of the rectifier. The rectifier of the flow of the particles of the separated mixture is replaceable and can be structurally adjusted for different granularities of the particles and types of the separated mixture.

The rectifier of the mentioned design preferably decreases the speed of the separated particles, limits their dispersion and sets the angle at which the particles enter the first zone of the separation chamber. During separation, deflection of the particles from their natural trajectory given by the position and inclination of the rectifier occurs. The deflection of the particles depends on both the magnitude of the electric charge *Q* and the vector of the intensity of the electric field ***E*,** which gives the direction and simultaneously the magnitude of the vector of the force action ***F***ₑ *= E*Q.*

The variability of the setting of the rectifier of the flow of the particles, the high-voltage electrodes and the collectors, as well as the relative position of the respective separation zones, allows to efficiently set and control the separation process, adjust the trajectory of the flow of the separated particles in relation to the state of the art and also adapt the setting to different kinds of separated materials, which is preferable since the different kinds of materials charge to different values of the electric charge *Q*, its distribution within particles of the same material in the mixture is random, and the particles have different sizes and weights, and therefore different mixtures of materials require different setting and thus also distribution of the intensity of the electric field *E* formed via the high-voltage electrodes positioned in the separation chamber, even more preferably, the setting of the rectifier and collectors may be adapted according to this distribution of the electric field. The choice of polarity, voltage, position, and inclination of each respective electrode depending on the setting of the upstream zone and the downstream zone in the direction of the flow of the particles of the separated mixture is essential.

Another object of the invention is an electrostatic separator used to separate or purify crushed, ground or granular mixtures that comprises a separation chamber in the basic or any of the detailed embodiments described above. The separation chamber may be oriented vertically such that the separated particles fall in free fall, or horizontally, wherein the separated particles are entrained by the flow of air or other media. The particles of the separated mixture may be conveyed via a pneumatic conveyor, in which the particles are continuously charged by friction with each other and with the walls of the conveyor, in the case of a vertical arrangement, the charged pass through a cyclone separator, the particles of the separated mixture enter the separation chamber through the rectifier, pass through the individual separation zones of the separation chamber and are collected in collection bins at its output. In another embodiment, the particles of the separated mixture may be transported by means of an inclined rotating drum in which the mixture is progressively moved towards the separation chamber and simultaneously mutual friction of the particles occurs such that they acquire electric charge and subsequently enter the separation chamber through the rectifier, pass through the individual separation zones of the separation chamber and are collected in collection bins at its output. A major advantage of the described separator is that the setting and control of the separation process can achieve a high purity of the output materials, i.e. respective components obtained by the separation of the mixture, and simultaneously a high efficiency of the separation process defined by the ratio of the volume of the output materials to the total volume of the separated mixture. A considerable advantage is also the low dependence of the purity of the output materials on the humidity of the environment, wherein it is true that the useful setting of the separation chamber described above, i.e. the setting of the individual separation zones, and especially the collection collectors, can achieve a low decrease in the purity of the output materials with increasing humidity, at the expense of a decrease in the efficiency of the separation process. The separator may further provide a continuous operation, in which the separator may be engaged as a respective component of a processing line in which the separated mixture passes without stopping between the individual processes. The separator also stands out for its low energy costs, as the power consumption of the machine is determined solely by the power consumption of the high-voltage sources, which corresponds to the charging current of the high-voltage electrodes, or possibly the conveyor, and also by low negative impacts on the environment, as it is a dry separation process without the formation of additional waste materials.

Another object of the invention is the use of an electrostatic separator, whether in the basic embodiment or in the detailed embodiment described above for separating or purifying plastics from the mixture. A method of electrostatic separation, in which the electric field for the passage of the flow of the particles of the separated mixture is formed in at least two successive independent separation zones via the high-voltage electrodes with independent application of the electric voltage for the high-voltage electrodes of each respective zone, and the polarity and/or magnitude of the electric voltage applied to the electrodes is different in at least two zones. Preferably, the electric field is further formed by rotation and/or distance and/or placement of the high-voltage electrodes that are positionable and simultaneously by positioning and rotation of the collection collectors that adjust the direction of the flow of the particles of the separated mixture. By utilizing automatic control, it is possible to control the separation process during operation of the machine, by adjusting the setting of the individual zones of the separation chamber in order to achieve a high purity of the output materials and simultaneously a high efficiency of the separation process, for the changing properties of the separated mixture during its separation. To ensure automatic control of the process, visual feedback can be used to monitor the flow of the particles of the separated mixture and by means of an algorithm to evaluate changes in its direction. Preferably, a continuous measurement of the increment of the weight of the respective collection bins positioned at the output of the separation chamber can also be used to control the separation process.

The above embodiment of the invention increases the efficiency of the separation of crushed, ground or granular mixtures of materials and the purity of output materials, essential herein is the correct setting of the polarity and magnitude of the voltage of the electrodes in the individual separation zones and adjustment of their position or rotation in order to spatially change the vector of the intensity of the electric field, as well as the mutual position of the independent zones and adjustment of the position and rotation of the collection collectors. Further, the efficiency of the separation may also be positively influenced by adjusting the moisture of the particles, for example by drying the separated mixture before the separation process, adjusting the size of the particles by crushing/grinding or by removing dust from the separated mixture, for example by sieving.

### Description of Drawings

A summary of the invention is further clarified using exemplary embodiments thereof, which are described with reference to the accompanying drawings, in which:
Fig. 1 schematically shows the individual parts of the separation chamber with two differently set zones, wherein the arrows indicate the direction and range of positioning or tilting of the high-voltage electrodes,
Fig. 2 schematically shows a possible setting of the separation chamber with a tiltable rectifier and with three independent zones, in which the separation of the mixture of materials with different electric charges *Q* occurs, which is illustrated by means of their trajectories.
Fig. 3 depicts the measured electric charge *Q* acquired by the particles of polyethylene terephthalate by means of the triboelectric effect during friction before their entry into the separation chamber of the electrostatic separator.
Fig. 4 presents the result of the evaluation of a video recording of the separation of a mixture of polyvinyl chloride and high-density polystyrene according to the first exemplary embodiment.
Fig. 5 shows the result of a computer simulation corresponding to an experiment of separation of a mixture of polyvinyl chloride and high-density polystyrene.
Fig. 6 depicts a prototype of a separator using a vertically oriented separation chamber with two separate zones and pneumatic transport of the separated mixture, within which triboelectric charging of the mixture occurs due to friction.
Fig. 7 depicts a detailed view of the separation chamber of the prototype depicted in fig. 6 and, simultaneously, a detailed view of the high-voltage electrodes of the two independent zones of the separation chamber.

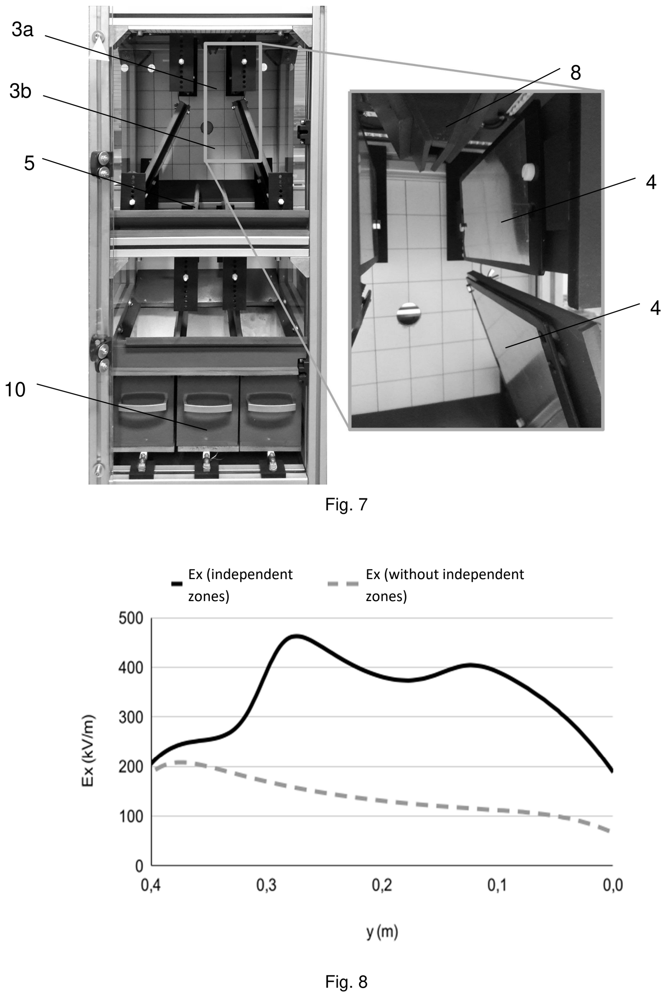

Fig. 8 depicts a chart of the distribution of the component *x* of the vector of the intensity of the electric field ***E*** in the vertical axis of the separation chamber according to fig. 7 on the vertical axis of the chart, where *Eₓ* denotes the given component. The depicted component *x* of the vector of the intensity of the electric field *Eₓ* is perpendicular to the vertical axis and represents the main component involved in the deflection of the electrically charged particles of the separated mixture. The depiction compares two different settings of the first and second independent zones, where one setting corresponds to a standard embodiment of the chamber according to the state of the art without independent zones, and the other setting corresponds to a distribution with independently set zones. A fundamental difference in the magnitude and simultaneously in the distribution of the electric field is evident, which is central to the setting and control of the separation process.
Fig. 9 depicts a separation chamber with four separation zones and a charging device composed of a rotating drum.

### Exemplary Embodiment of the Invention

During separation of the particles 2 of the separated mixture via the exemplary embodiments below, the electric field for the passage of the flow of the particles 2 of the separated mixture was formed into a shape and force distribution sequentially in at least two, or three, or four successive separation zones 3, 3a, 3b, 3c, 3d by means of high-voltage electrodes 4 with a different position and rotation, distance and placement of the positionable high-voltage electrodes 4 and collection collectors 5.

In general, for each exemplary embodiment, it was possible to provide the separation chamber 9 with different shapes and sizes of the individual high-voltage electrodes 4, or possibly replace them for different separated mixtures as required. The use of more than two high-voltage electrodes 4 in some of the separation zones 3, 3a, 3b, 3c, 3d was also tested. For each specific separation, it was possible to set and change as needed the values of the applied electric voltage, the polarity of the voltage of the high-voltage electrodes 4, the orientation or inclination of each high-voltage electrode 4 relative to the central axis of the separation chamber 9 passing in the direction of flow of the particles 2 of the separated mixture, the position and select uniform or non-uniform placement of the high-voltage electrodes 4 around the central axis of the separation chamber 9 passing in the direction of the flow of the particles 2 of the separated mixture, and thus manipulate the vector of the intensity of the electric field, the vector of the force action of the electric field on the particles 2 of the separated mixture, the magnitude of the deflection of the particles 2 of the separated mixture from the central axis of the separation chamber 9 passing in the direction of the flow of the particles. Collection collectors 5 were always positioned downstream of the last separation zone, in some embodiments, they were also used between the second separation zone 3b and the third separation zone 3c, or between the third separation zone 3c and the fourth separation zone 3d, but they may be inserted between the individual separation zones 3, 3a, 3b, 3c, 3d in different ways, as required.

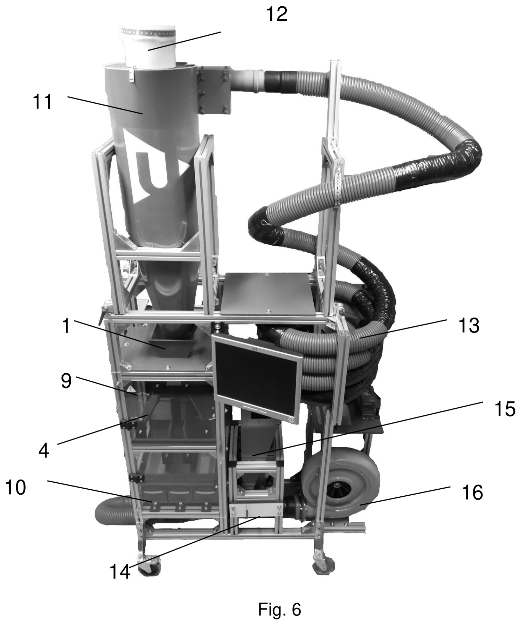

One exemplary embodiment is the separation chamber 9 illustratively shown in fig. 1, which is implemented in the prototype of the separator shown in fig. 6 with a detailed representation of the separation chamber 9 and an enlarged photograph of the individual separation zones 3a, 3b of the zones in fig. 7. This separation chamber 9 is oriented vertically in an electrostatic separator intended for separation or purification of mixtures containing materials that may acquire different electric charges. Mixtures containing plastics, minerals, and agricultural crops were tested.

In the first exemplary embodiment, the particles 2 of the separated mixture, which at the beginning of the process constitute an as yet unsorted bulk mixture of particles prepared for separation of the individual particles according to their kind, were first supplied from a hopper 15 for the separated mixture with a feeder 14 by means of the driving force of a fan 16 by a pneumatic conveyor 13 to a cyclone separator 11 positioned above the separation chamber 9. At the output of the cyclone separator, a dust filter 12 was positioned, which ensures cleaning of the air used during transport of the particles 2 of the separated mixture. Only then were the particles 2 of the separated mixture directed by the rectifier 1 of the flow of the particles 2 of the separated mixture at the entry into the separation chamber 9 and further vertically fell downward under the influence of gravity through further parts of the separation chamber 9, wherein their trajectory was variously influenced by the action of the high-voltage electrodes 4 in the individual independent separation zones 3; i.e., in this exemplary embodiment first in the first separation zone 3a provided with two oppositely positioned high-voltage electrodes 4 and subsequently in the second separation zone 3b provided with two more oppositely positioned high-voltage electrodes 4, as shown in fig. 7, where each separation zone 3, 3a, 3b had a separate regulable supply of electric voltage from a source, and therefore it was possible to set a different value of electric voltage in the first separation zone 3a than in the second separation zone 3b. Downstream of the second separation zone 3b, the collection collectors 5 were further positioned in the direction of the flow of the particles 2 of the separated mixture, which could be suitably tilted and moved such that the individual particles 2 of the separated mixture, separated according to the kind of the particles, were transported away into the corresponding collection bins 10.

The rectifier 1 of the flow of the particles was a hollow object that contained a cascade of the rectifier 6 composed of individual inclined stops 7 of the rectifier on its internal wall and further, at the end in the direction of the flow of the particles 2 of the separated mixture, a narrowed elongated conical mouth 8.

For example, in one set of tests, the high-voltage electrodes 4 in the first separation zone 3a had a flat shape and dimensions of 100 x 300 mm, they were oriented parallel, they were not tilted, their mutual distance was 10 cm and a voltage of 45 kV was supplied to them. These high-voltage electrodes 4 were centered relative to the central vertical axis of the separation chamber, i.e., simultaneously relative to the axis of the input direction of the incident flow of the particles 2 of the separated mixture, i.e., situated opposite each other at 180° on an imaginary circle around the central axis of the separation chamber passing in the direction of the flow of the non-deflected particles 2 of the separated mixture, i.e., the central axis passing through the center of the direction of the flow of the particles 2 of the separated mixture that the particles would have if they were not charged with electric charge and thus if they were not deflected from the original direction after exiting the rectifier 1 of the separated particles. The high-voltage electrodes 4 of the second separation zone 3b had, for example, a flat shape and dimensions of 600 x 300 mm, and were in this case positioned with their adjacent part substantially below the high-voltage electrodes 4 of the first zone 3a, at a distance of 5 cm from the high-voltage electrodes 4 of the first zone 3a, their input mutual distance was 10 cm, and they were tilted at an angle of 30° with respect to the vertical axis of the separation chamber such that they were moving away from each other in the direction of the flow of the particles 2 of the separated mixture. Each high-voltage electrode 4 was provided with a means for changing the position, distance, and angle of rotation by means of insulated cables holding the high-voltage electrodes 4 and allowing their tilting. It was also possible to move the second separation zone 3b away from or closer to the first separation zone 3a by a positioning means in the form of cables.

On the device described above, for example, a mixture with a particle size of 3 to 5 mm containing particles of PVC - polyvinyl chloride, and particles of high-density PS - polystyrene, in which the particles of PVC were charged to a negative electric charge of an average magnitude of -0.5 nC and the particles of PS to a positive electric charge of an average magnitude of 1.1 nC by means of the triboelectric effect during friction. The efficiency of the separation was determined to be more than 93% and the purity of the output materials to be 98% during the experiment.

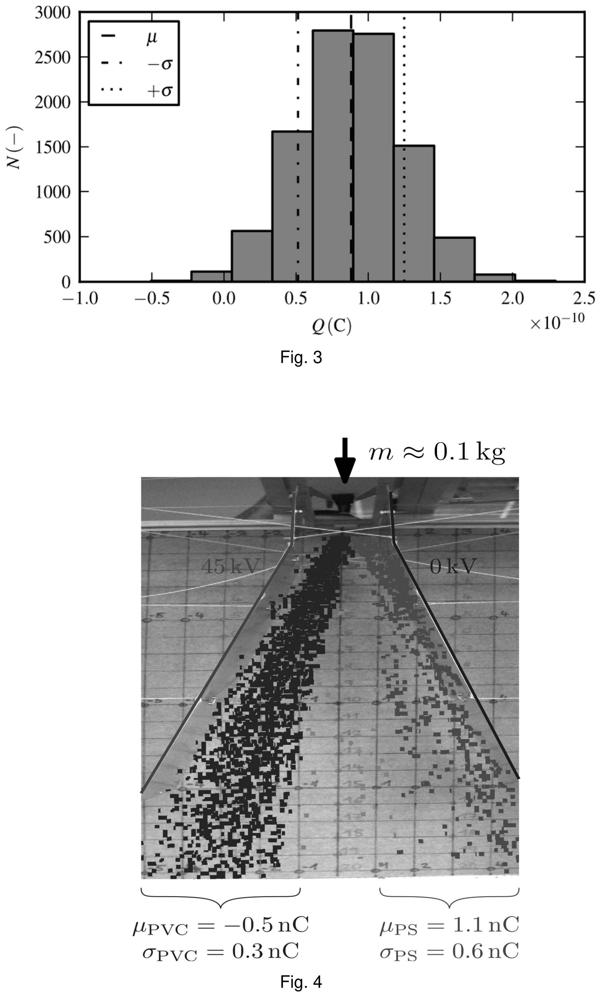

Fig. 4 depicts a conducted experiment of separation of the mixture of PVC - polyvinyl chloride and high-density PS polystyrene, captured by means of a high-speed camera video recording, which was subsequently processed by a computer algorithm for visualization of the position of the particles and simultaneously determining the parameters of the distribution of the electric charge *Q*, where the quantity *µ* denotes the mean value and the quantity *σ* the standard deviation.

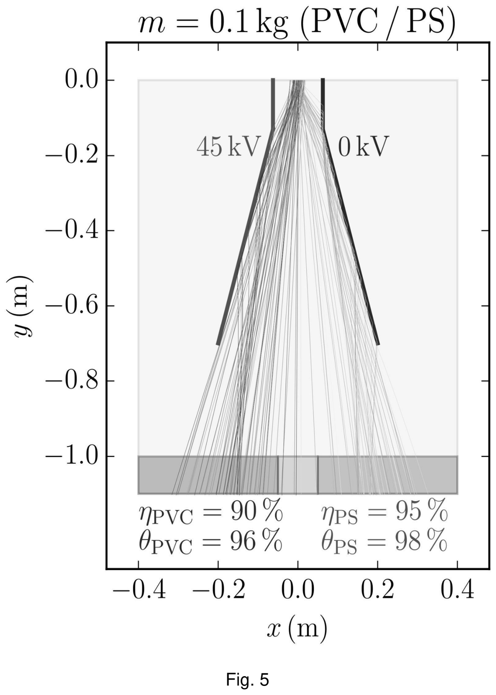

Fig. 5 shows the result of a computer simulation corresponding to the conducted experiment by means of a mathematical model calculating the trajectories and separation of the particles 2 of the separated mixture attracted by the high-voltage electrodes 4 in the individual separation zones, i.e. in the first separation zone 3a and the second separation zone 3b, where the mixture of polyvinyl chloride and high-density polystyrene was separated, wherein the individual lines depict the trajectory of the individual particles of the separated mixture, where the quantity *η* denotes the calculated efficiency of the separation process for the respective component of the mixture and the quantity *θ* denotes the calculated purity of the output materials. From the conducted simulation depicted in fig. 5, an average efficiency of the separation process of 92.5% and an average purity of the output materials of 97% were calculated.

Fig. 8 depicts a chart of the distribution of the component *x* of the vector of the intensity of the electric field ***E*** in the vertical axis of the separation chamber according to fig. 7 on the vertical axis of the chart, where *Eₓ* denotes the given component. The depicted component *x* of the vector of the intensity of the electric field *Eₓ* is perpendicular to the vertical axis and represents the main component involved in the deflection of the electrically charged particles of the separated mixture. The depiction compares the setting of a conventional single-zone device from the state of the art not containing independent zones to the setting of two independent zones with the first separation zone 3a and the second separation zone 3b according to the present first exemplary embodiment. A fundamental difference in the magnitude and simultaneously in the distribution of the electric field is evident from the chart, which is central to the setting and control of the separation process.

Further, the following mixtures were experimentally separated:
- PP and PET with a purity of 99% and an efficiency of 87%,
- ABS and LDPE with a purity of 94% and an efficiency of 86%,
- TPU and ABS with a purity of 95% and an efficiency of 90%,
- TPU and PVC with a purity of 95% and an efficiency of 80%,
- PS and ABS with a purity of 94% and an efficiency of 86%,
- PET and ABS with a purity of 94% and an efficiency of 88%,
- ABS and PVC with a purity of 95% and an efficiency of 66%,
- ABS and LDPE with a purity of 98% and an efficiency of 65%;
where the abbreviations used mean:
∘ ABS - acrylonitrile-butadiene-styrene
∘ PP - polypropylene
∘ PS - polystyrene
∘ PET - polyethylene terephthalate
∘ LDPE - low-density polyethylene
∘ TPU - thermoplastic polyurethanes
∘ PVC - polyvinyl chloride

In addition to the plastic materials, mixtures of plastic and wood, plastic and paper, plastic of electrically conductive materials - "e-waste", further, agricultural crops - for example wheat and its chaff, and minerals, e.g., a mixture of various inorganic materials of the mica type were experimentally successfully tested.

Fig. 3 depicts the measured electric charge *Q* acquired by the particles of PET by means of the triboelectric effect during friction before their entry into the separation chamber of the electrostatic separator, where the quantity *µ* denotes the mean value and the quantity σ the standard deviation. The normal distribution of the electric charge Q is evident from the depiction, which fundamentally influences the subsequent separation.

The negative effect of dust particles deposited on the high-voltage electrodes 4 was demonstrated in the experiments. Therefore, a means for blowing off these particles by air flow was added during further testing on all the prototypes.

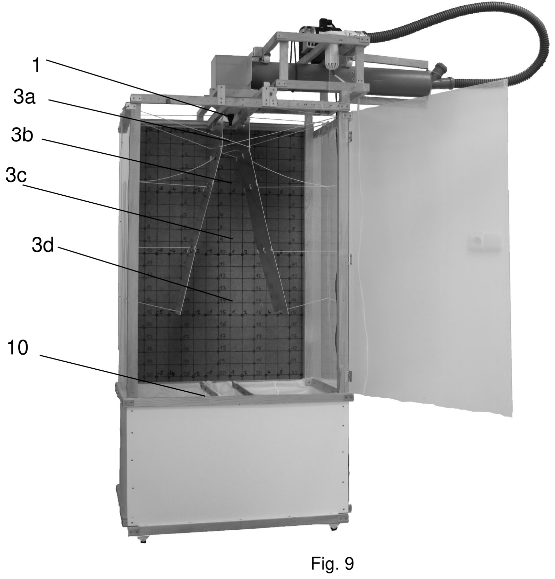

The separation of the above experimental mixtures of particles was repeated in the second exemplary embodiment, where a prototype of a separator was assembled using a vertically oriented separation chamber according to fig. 9 allowing separation into up to four separate separation zones 3, in a successive sequence of zones: the first separation zone 3a, the second separation zone 3b, the third separation zone 3c and the fourth separation zone 3d, and further with a charging device composed of a rotating drum within which, due to mixing, friction of the particles of the separated mixture occurs, thereby causing their charging.

All the experiments were performed on the prototype depicted in fig. 6 with the separation chamber depicted in fig. 7, or on a prototype with the separation chamber depicted in fig. 9. Further, a device with a vertical separation chamber 9 with three separation zones 3, specifically the first separation zone 3a, the second separation zone 3b, and the third separation zone 3c, as indicated in fig. 2, was also proposed, or, further, a device with a horizontal separation of particles with two separation zones 3.

### Industrial Applicability

The separation chamber described above may be used in electrostatic separators to separate particles that may be electrically charged from a mixture, for example of plastics, agricultural crops, or minerals.

### List of Reference Signs

- 1 -: Rectifier of the flow of the particles
- 2 -: Particles of the separated mixture
- 3-: Separation zone
3a - first separation zone
3b - second separation zone
3c - third separation zone
3d - fourth separation zone
- 4-: High-voltage electrode
- 5-: Collection collector
- 6-: Cascade of the rectifier
- 7 -: Stops of the rectifier
- 8 -: Elongated conical mouth
- 9 -: Separation chamber
- 10 -: Collection bin
- 11 -: Cyclone separator
- 12 -: Dust filter
- 13 -: Pneumatic conveyor
- 14 -: Feeder
- 15 -: Hopper for the separated mixture
- 16 -: Fan

## Claims

1. A separation chamber (9) for an electrostatic separator, where this separation chamber (9) comprises a rectifier (1) of the flow of particles (2) of a separated mixture, a separation zone (3) positioned downstream thereof provided with high-voltage electrodes (4), and collection collectors (5) positioned downstream thereof in the direction of the flow of the particles of the separated mixture, **characterized in that** the separation chamber (9) contains at least two separation zones (3a, 3b, 3c, 3d), that is, at least a first separation zone (3a) and a second separation zone (3b), where each of these separation zones (3a, 3b, 3c, 3d) is provided with at least two dedicated high-voltage electrodes (4) for separately generating an electric field, wherein in each separation zone (3a, 3b, 3c, 3d), at least one of the following parameters is separately settable or selectable: shapes and/or sizes of the individual high-voltage electrodes (4), values of the applied electric voltage, polarity of the voltage of the high-voltage electrodes (4), orientation or inclination of each high-voltage electrode (4) relative to the central axis of the separation chamber (9) passing in the direction of the flow of the particles (2) of the separated mixture, the position and the uniform or non-uniform placement of the high-voltage electrodes (4) around the central axis of the input direction of the flow of the particles (2) of the separated mixture, wherein the collection collectors (5) are positioned at least downstream of the last separation zone (3, 3b, 3c, 3d).

2. The separation chamber (9) according to claim 1, **characterized in that** the electric voltage at the high-voltage electrodes (4) in each separation zone (3, 3a, 3b, 3c, 3d) is settable independently of the electric voltage of the electrodes in the other separation zones (3, 3a, 3b, 3c, 3d).

3. The separation chamber (9) according to claim 1 or 2, **characterized in that** it has the separation zones (3, 3a, 3b, 3c, 3d) positioned gradually downstream of each other in the direction of the flow of the particles (2) of the separated mixture and has means for mutually positioning the separation zones (3, 3a, 3b, 3c, 3d) relative to each other, in particular for bringing them closer or further apart.

4. The separation chamber (9) according to any one of the preceding claims, **characterized in that** it is provided with means for changing the position and/or distance and/or angle of rotation of each respective high-voltage electrode (4).

5. The separation chamber (9) according to any one of the preceding claims, **characterized in that** the high-voltage electrodes (4) of the second zone (3b) are arranged identically on an imaginary circle around the central axis of the separation chamber (9) passing in the direction of the flow of the particles (2) of the separated mixture as the high-voltage electrode (4) of the first zone (3a) such that the respective high-voltage electrodes (4) of the individual zones are situated substantially below each other.

6. The separation chamber (9) according to any one of the preceding claims, **characterized in that** it contains at least one high-voltage electrode (4) that has at least a part thereof, in particular a surface and/or an edge, covered with a layer of electrically non-conductive material.

7. The separation chamber (9) according to any one of the preceding claims, **characterized in that** it further contains at least one means for removing the particles captured on the high-voltage electrode, in particular for blowing off with an air flow, suction or mechanical knocking.

8. The separation chamber (9) according to any one of the preceding claims, **characterized in that** at least one separation zone (3, 3a, 3b, 3c, 3d) is further supplemented with an additional electrode for changing the distribution of the vector of the intensity of the electric field within that separation zone (3, 3a, 3b, 3c, 3d).

9. The separation chamber (9) according to any one of the preceding claims, **characterized in that** further collection collectors (5) are positioned downstream of the separation zone (3, 3a, 3b, 3c) followed by a further separation zone (3, 3b, 3c, 3d).

10. The separation chamber (9) according to any one of the preceding claims, **characterized in that** the collection collectors (5) are separately settable and/or slidable and/or tiltable.

11. The separation chamber (9) according to any one of the preceding claims, **characterized in that** the rectifier (1) of the flow of the particles of the separated mixture (2) forms a hollow object at the output of which there is a narrowed and elongated mouth, in particular an elongated conical mouth (8).

12. The separation chamber (9) according to any one of the preceding claims, **characterized in that** the rectifier (1) contains a cascade (6) of the rectifier composed of stops (5) of the rectifier on its internal wall.

13. The separation chamber (9) according to any one of the preceding claims, **characterized in that** the rectifier (1) is positionable and/or tiltable relative to the first separation zone (3a).

14. An electrostatic separator, **characterized in that** it comprises the separation chamber (9) according to any one of the preceding claims.

15. A method of electrostatic separation, **characterized in that** the electric field for the passage of the flow of the particles (2) of the separated mixture is formed differently in each of at least two successive separation zones (3, 3a, 3b, 3c, 3d) of the separation chamber (9) according to any one of claims 1 to 13, by differently presetting or selecting at least one of the following parameters in each of the separation zones: shapes and/or sizes of the individual high-voltage electrodes (4), values of the applied electric voltage, polarity of the voltage of the high-voltage electrodes (4), orientation or inclination of each high-voltage electrode (4) relative to the central axis of the separation chamber (9) passing in the direction of the flow of the particles (2) of the separated mixture, the position and the uniform or non-uniform placement of the high-voltage electrodes (4) around the central axis of the separation chamber (9) passing in the direction of the flow of the particles (2) of the separated mixture.
